(19) Europäisches Patentamt
European Patent Office
Office européen des brevets

(11) EP 0 553 189 B1

(12) **EUROPEAN PATENT SPECIFICATION**

(45) Date of publication and mention of the grant of the patent:
**12.06.1996 Bulletin 1996/24**

(21) Application number: **91918445.7**

(22) Date of filing: **16.10.1991**

(51) Int Cl.[6]: **C08F 8/30**, C08F 8/00, C08F 299/00, C09D 133/04

(86) International application number:
**PCT/EP91/02007**

(87) International publication number:
**WO 92/07010 (30.04.1992 Gazette 1992/10)**

# (54) AQUEOUS COATING COMPOSITIONS INCLUDING A REACTIVE EMULSIFIER

WÄSSRIGE ANSTRICHSTOFFE, DIE EIN REAKTIONSFÄHIGES EMULGIERMITTEL ENTHALTEN

COMPOSITIONS DE REVETEMENT AQUEUSES RENFERMANT UN EMULSIFIANT REACTIF

(84) Designated Contracting States:
**AT BE CH DE DK ES FR GB GR IT LI LU NL SE**

(30) Priority: **16.10.1990 EP 90202769**

(43) Date of publication of application:
**04.08.1993 Bulletin 1993/31**

(73) Proprietor: **Akzo Nobel N.V.**
**NL-6824 BM Arnhem (NL)**

(72) Inventors:
- **METZGER, Carl, Walter**
  **D-7306 Denkendorf (DE)**
- **FEITH, Bernhard**
  **D-7000 Stuttgart 30 (DE)**
- **RENTSCHLER, Ute**
  **D-7537 Remchingen (DE)**
- **ZEDLER, Angelika, Anita**
  **D-7000 Stuttgart 31 (DE)**

(74) Representative: **Schalkwijk, Pieter Cornelis et al**
**AKZO NOBEL N.V.**
**Patent Department (Dept. APTA)**
**P.O. Box 9300**
**NL-6800 SB Arnhem (NL)**

(56) References cited:
**EP-A- 0 156 657**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 0 553 189 B1

## Description

### Background of the Invention

The present invention relates generally to aqueous coating compositions comprising generally lipophilic, crosslinkable binders which are dispersed in an aqueous medium with the aid of a special oligomeric/polymeric amphiphatic reactive emulsifying agent.

Coating compositions comprising generally lipophilic, crosslinkable binders are well-known in the art. Because the binders are lipophilic, these coating compositions are most readily formulated as organic solvent based systems. Increasingly stringent health/safety and environmental legislation, however, is making the use of organic solvents an expensive and unfashionable option for the coatings industry. As such, the industry is intensively seeking waterborne alternatives to their long-standing and commercially succesful organic solvent based products; however, it has been difficult at best to make the switch to water without significant loss of coating stability and/or resulting film quality.

One pursued option has been to render the lipophilic binders water-dilutable (so-called "self-emulsifying" resins). This can and has been done, for example, by building hydrophilic functionality into a polymeric backbone or by providing a polymer structure wherein this hydrophilic functionality is made pendant to such polymeric backbone. See, for example, US2634245, US3379548, US4028313, US4315044, US4321305, US4608406, US5021544 and EP-A-0355892. These self-emulsifying resins, however, generally possess a relatively large total number of hydrophilic groups which tends to render the resulting films somewhat water sensitive.

In order to overcome these disadvantages, attempts have been made to disperse these lipophilic binders in water with the aid of apart dispersing agents. For example, US4352898, US4598108, US4737530, US4929661 and EP-A-0262720 disclose the use of relatively low molecular weight organic compounds as dispersing agents. The described aqueous coating compositions, while satisfactory in many respects, may still require the use of significant amounts of organic co-solvents. Additionally, the described dispersants may evaporate and contribute to the overall VOC, and what dispersant remains in the resulting film tends to act as an undesirable hydrophilic center.

Relatively higher molecular surfactants have also been used. For example, US3945964, US4318832 and WO84/00169 describe the use of various non-ionic (e.g., polyoxyalkylene) and anionic surfactants. The described surfactants, however, are generally non-reactive and, while solving certain disadvantages of the lower molecular weight organic compounds, have a stronger tendency to remain as undesirable hydrophilic centers in resulting films.

In still a further attempt to overcome the problems associated with the above-referenced systems, it has been proposed to use surfactants which become bound into the film structure during the crosslinking reaction. Such "reactive" emulsifiers have been described, for example, in AU-A-82247/87, GB-A-2100271, DE-OS-2455896, DE-OS-3900257,: US3979346, US4221685 and US4233194.

### Summary of the Invention

An especially advantageous such reactive emulsifier has now been found which can be utilized to formulate aqueous coating compositions of generally lipophilic, crosslinkable binders without the need for significant amounts of either organic cosolvents or volatile amines, the latter being generally used to render acid group-containing (anionic) components water-dilutable.

These goals are accomplished, in part, through the use of a special reactive amphiphatic emulsifier which comprises a lipophilic backbone having separately pendant therefrom:

(a) at least one activated unsaturated group; and
(b) at least one hydrophilic polyoxyalkylene group selected from

(1) a polyoxyalkylene monoalkylether group of the general for mula (I)

$$-O-[(C_3H_6O)_n/(C_2H_4O)_{n1}] - R \qquad (I)$$

and
(2) a polyoxyalkylene monoamine monoalkylether group of the formula (II)

```
         R²
        /
    - N
        \
         [(C3H6O)n2/(C2H4O)n3] - R¹
```

wherein

R is selected from a $C_1$ to $C_4$ alkyl group,
$R^1$ is selected from an H atom and a $C_1$ to $C_4$ alkyl group,
$R^2$ is selected from (i) an alkyl group having 1 to 20 carbon atoms, (iia) the residue of a monoepoxide having 1 to 20 carbon atoms, (iib) the residue of a monoacrylate having 8 to 20 carbon atoms, and (iii) a polyoxyalkylene monoether group of the general formula (III)

$$[(C_3H_6O)_{n4}/(C_2H_4O)_{n5}] - R^3 \qquad (III),$$

$R^3$ is selected from a $C_1$ to $C_4$ alkyl group,
n, n2 and n4 are independently 0 to 25,
n1 is 4 to 40 and
n3 and n5 are independently 0 to 40,
with the proviso that $n+n1 \leq 50$, $4 \leq n2+n3+n4+n5 \leq 50$ and $n3+n5 \geq 4$;

the reactive amphiphatic emulsifier having an HLB value of at least about 6.

In accordance with the present invention, therefore, there is provided an aqueous coating composition comprising (A) a generally lipophilic, crosslinkable binder, (B) optionally, a chemical curing/crosslinking agent for the crosslinkable binder and (C) an emulsifying agent, characterized in that the emulsifying agent comprises the above-described reactive amphiphatic emulsifer.

The use of these reactive amphiphatic emulsifiers in accordance with the present invention alleviates some of the problems associated with the self-emulsifying resins because this option allows a more optimum total number of hydrophilic groups. In addition, some of the problems of the higher molecular weight non-reactive and lower molecular weight emulsifying agents are alleviated because the reactive emulsifier is bound into the final crosslinked polymer network.

A surprising advantage of the use of these reactive amphiphatic emulsifiers in accordance with the present invention is that aqueous coating systems can be formulated based upon a wide variety of generally lipophilic binder polymers, which aqueous coating compositions retain the desirable benefits of their organic solvent based counterparts including good solvent (both organic and aqueous) resistance as well as good corrosion resistance. The need for significant amounts of organic co-solvents, therefore, is alleviated.

These and other features and advantages of the present invention will be more readily understood by those skilled in the art from a reading of the following detailed description.

## Detailed Description of the Preferred Embodiments

As mentioned above, the aqueous coating compositions in accordance with the present invention are based in part upon generally lipophilic crosslinkable binders.

By "generally lipophilic" is it meant that the binder is substantially non-dilutable in water. The binder, however, may contain or be based upon components which in and of themselves are water-dilutable as long the binder itself essentially is not.

"Crosslinking" is a concept well-known to those skilled in the relevant art. Crosslinking, of course, refers to chemical drying as opposed to physical drying (mere solvent evaporation), although both can play significant roles in ultimate film-formation. Crosslinking functionality in coatings compositions is varied and again generally known to those skilled in the relevant art.

For use with the present invention, the crosslinking functionality of the generally lipophilic binders must be capable of reacting under the same conditions as the activated unsaturated group(s) of the reactive amphiphatic emulsifier. In

other words, a common curing/crosslinking agent should be suitable for both the crosslinking functionality of the binder as well as the activated unsaturated group(s) of the reactive amphiphatic emulsifier.

As utilized herein, "curing agent" refers to an agent which merely initiates and sustains a crosslinking reaction. Curing agents may be both chemical and non-chemical. Chemical curing agents, such as peroxides, are normally utilized in small amounts with respect to the binder and are not substantially chemically bound into into the final reaction product. Non-chemical curing agents include, for example, various forms of radiation such as UV, microwave and heat.

"Crosslinking agents," on the other hand, are substances containing functional groups which react with the crosslinking functionality of the binder and are, as a consequence, incorporated into the final reaction product. Crosslinking agents are generally utilized in relatively large amounts with repect to the binder.

Curing/crosslinking agents for activated unsaturated groups are generally well-known to those skilled in the relevant art.

As preferred crosslinking agents may be mentioned those that react with activated unsaturated groups via a Michael addition. As preferred such Michael addition crosslinking agents may be mentioned a wide variety of primary and/or secondary amine groups-containing compounds such as, for example, those disclosed in US3291775, US4303563, US4981944, US4990577 and US5011994.

As preferred examples of such amine crosslinking agents may be mentioned (i) aliphatic and/or cycloaliphatic amine compounds containing 2-24 carbon atoms and at least one primary amino group; and (ii) adducts of a molecular weight of 300-1500 of (a) an epoxy, isocyanate and/or $\alpha,\beta$-ethylenically unsaturated carbonyl compound and (b) a compound containing at least one primary amino group and a group reacting with the epoxy, isocyanate and/or $\alpha,\beta$-ethylenically unsaturated carbonyl compound. More preferably, these amine crosslinking agents contain 2-4 primary amino groups and 0-4 secondary amino groups. Especially preferred of these are, for example, polyether polyamines of the type commercially available under the trade designation "Jeffamine" of Texaco Chemical Company.

Other suitable amine crosslinking agents include monoprimary amine compounds of the general formula (XII):

$$H_2N\text{-}(CH_2)_{n6}\text{-}NR^8R^9 \qquad (XII)$$

wherein

- n6 is a number from 1 to 4,
- $R^8$ is selected from an H atom, a $C_1$ to $C_3$ alkyl and a monohydroxy substituted $C_1$ to $C_3$ alkyl, and
- $R^9$ is selected from a $C_1$ to $C_3$ alkyl and a monohydroxy substituted $C_1$ to $C_3$ alkyl,

which are disclosed in EP-A-0401898. Especially preferred of these are, for example, N-ethyl-N-(2-aminoethyl) ethylamine, N-methyl-N-(3-aminopropyl) ethanolamine, N-methyl-N-(2-aminoethyl) methylamine and N-methyl-N-(3-aminopropyl) methylamine.

Still other suitable amine crosslinking agents include polyamino amides such as those disclosed in EP-A-0262720. The preferred polyamino amides generally comprise an amine number of 60-1000, and are built up from (i) mono- and/or dicarboxylic acids having 2-40 carbon atoms and (ii) polyamine compounds having 2-6 primary amino groups, 0-6 secondary amino groups and 2-20 carbon atoms.

The amine crosslinking agents most preferred for use in the present aqueous coating compositions are those of the general formula (XII) described above.

Oxazolidine compounds, such as disclosed in US4373008 are also suitable Michael addition type crosslinking agents.

As still other suitable Michael addition type crosslinking agents may be mentioned compounds containing activated methylene groups, for example, acetoacetate and/or malonate group-containing compounds.

As suitable acetoacetate group-containing compounds may be mentioned lower molecular weight acetoacetates such as trimethylolpropane triacetoacetate, as well as polymeric compounds containing pendant acetoacetate groups such as disclosed in US4408018.

As suitable malonate group-containing compounds may be mentioned polymaleate oligomeric and polymeric esters such as disclosed in US4602061.

As suitable combination curing/crosslinking agents for activated unsaturated groups may be mentioned, for example, allyloxy groups-containing compounds such as disclosed in US4590101, AU66/2337, EP-A-0067625 and US4145248.

Preferred among these free radical reactive curing/crosslinking agents are those comprising an oligomeric and/or polymeric backbone including a plurality of mer units containing pendant allyloxy groups, such as those of the general formula (XIII):

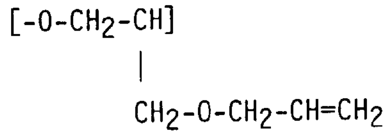

(XIII)

An especially preferred such reactive crosslinker is commercially available under the trade designation Santolink XI-100 from Monsanto Chemical Company.

As chemical curing agents for activated unsaturated groups may be mentioned free-radical initiators such as peroxides and hydroperoxides. These compounds are in general well-known to those skilled in the art and need no specific elucidation. As specific preferred examples, however, may be mentioned cumene hydroperoxide and methylethyl ketone peroxide.

Of course, as indicated above, activated unsaturated groups may be cured utilizing non-chemical curing agents such as UV radiation. See, for example, US4382102.

Depending upon the type of coating composition and desired application, various other conventional catalyst related additives may also be utilized. For example, if an oxidatively drying coating is desired, any number of well-known driers may be added to the coating composition. As examples may be mentioned metal siccatives such as manganese octoate and cobalt octoate.

The use of these other additives is well-known to those skilled in the art, and need not be elucidated further.

Especially preferred for use with the present invention are the aforementioned amine group-containing crosslinking agents. As such, it is preferred that the binders utilized in the present invention contain functional groups which are reactive with amine groups (amine-reactive functional groups), and especially functional groups which are reactive with amines under ambient temperature conditions (ambient temperature amine-reactive functional groups).

Such functional groups are in general well-known to those skilled in the art and include, for example, one or more of activated unsaturated groups, activated methylene groups, epoxy groups, aromatic activated aldehyde groups (see, e.g., EP-A-0378265), carbonate groups (see, e.g., JP-A-01146968), azlactone groups, oxalate ester groups (see, e. g., US4414250 and DE-A-4036984) and bismaleimides. Preferred of these are activated unsaturated, activated methylene and epoxy groups, which are discussed in detail below.

As examples of generally lipophilic binders containing one or more, and preferably on average at least two, pendant activated unsaturated groups may be mentioned those disclosed in US4303563 (column 5, line 42 through column 7, line 30), US4373008 (column 2, line 54 through column 4, line 47), US4382102 (column 2, line 12 through column 3, line 4), US4408018 (column 2, lines 19-68), US4590101 (column 3, line 29 through column 4, line 12), US4602061 (column 3, lines 14-55), US4871822 (column 3, line 10 through column 4, line 14), US4981944 (column 2, line 23 through column 5, line 36), US4990577 (column 1, line 44 thorugh column 3, line 39), EP-A-0262720 (column 1, line 44 through column 4, line 31) and EP-A-0401898 (page 2, line 49 through page 5, line 24).

As the preferred pendant activated unsaturated groups for the binder may be mentioned groups of the general formulas (IV), (V), (VI) and/or (VII)

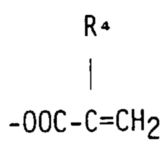

(IV)

$$-OOC-CH=CH-COOR^5 \qquad (V)$$

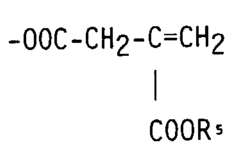

(VI)

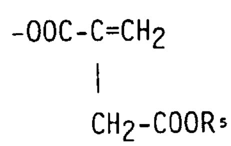

(VII)

wherein

$R^4$ is selected from an H atom and a methyl group,

$R^5$ is selected from an H atom, a group $R^6$, a group of the formula (VIII) and a group of the formula (IX)

$$-CH(OH)-CH_2-CH_2R^7 \quad (VIII)$$

$$-CH_2-CH(OH)-CH2R^7 \quad (IX)$$

$R^6$ is selected from an alkyl group, a cycloalkyl group and an aryl group, which groups may be substituted or not with an alkyl, and

$R^7$ is selected from an H atom, a group $R^6$, a group of the formula (X) and a group of the formula (XI)

$$-OR^6 \quad (X)$$

$$-OOC-R^6 \quad (XI).$$

As examples of suitable binders containing pendant activated unsaturated groups of the formula (IV) may be mentioned those disclosed in US4382102, US46020061, US4990577, EP-A-0262720 and EP-A-0401898. In general, these binders may be referred to as acryloyl and methacryloyl group-containing binders.

Preferred examples include (i) the acrylic and/or methacrylic esters of di-, tri- and polyvalent polyols such as polyester and polyether polyols; (ii) adducts of an hydroxyl group-containing acrylic and/or methacrylic ester to a compound containing at least two isocyanate and/or epoxy groups; and (iii) adducts of acrylic and/or methacrylic acid to a compound containing at least two epoxy groups. Especially preferred among these are the adducts of acrylic and/or methacrylic acid to the epoxy groups-containing compounds. Further details may be found from the previously mentioned references.

As specific examples of suitable binders containing pendent activated unsaturated groups of the formulas (V), (VI) and (VII) may be mentioned those disclosed in US4981944 and EP-A-0401898. In general, these pendant activated unsaturated groups are derived from maleic acid and anhydride, fumaric acid, and itaconic acid and anhydride.

Preferred examples include (i) adducts of maleic acid (anhydride) and/or itaconic acid (anhydride) to an OH groups-containing polymer, with subsequent reaction (e.g., esterification or neutralization) of at least a portion of remaining carboxyl functionality; (ii) adducts of maleic, fumaric and/or itaconic monoesters to compounds containing at least two epoxy groups; and (iii) adducts of monofunctional epoxy compounds to maleic, fumaric and/or itaconic monoesters, which are subsequently reacted with compounds containing at least two isocyanate groups. Especially preferred among these are the adducts of the maleic and/or itaconic acid (anhydride) to the OH groups-containing polymers. Further details again may be found from the previously mentioned references.

In other apsects, it is preferred that the activated unsaturated group-containing binders possess a number average molecular weight (Mn) in the range of from about 800 to about 100000, more preferably in the range of from about 800 to about 15000, and a C=C equivalent weight in the range of from about 400 to about 3000, more preferably from about 500 to about 1500.

As examples of generally lipophilic binders containing one or more, and preferably on average at least two, pendant activated methylene groups may be mentioned those disclosed in US4408018 (column 1, line 51 through column 2, line 6), US4602061 (column 1, line 50 through column 3, line 13), US4772680 (column 1, line 23 through column 2, line 54), US4871822 (column 4, line 34 through column 5, line 9) and US4929661 (column 1, line 32 through column 2, line 69).

As specific examples may be mentioned compounds obtained by reacting diketene or an alkyl acetoacetate with a polyol having two or more hydroxyl groups, for example, ethylene glycol, propylene glycol, trimethylol propane and pentaerythritol; polyether polyols obtained by reacting an alkylene oxide with a hydroxy compound containing two or more hydroxyl groups; polyester polyols such as polycaprolactone polyols; epoxy resins obtained by reacting epichlorohydrin with a diaryloyl alkane; and acrylic polyols obtained by the addition (co)polymerization of hydroxyl group-containing (meth)acrylic monomers optionally with other addition polymerizable monomers. Such acetoacetate group-containing oligomers/polymers can also be obtained by (co)polymerizing monomer units having one or more acetoacetate groups, for example, the acetoacetate esters of hydroxyalkyl (meth)acrylate or allyl alcohol monomer units. Further details may be found from the previously mentioned references.

Preferred among the acetoacetate group-containing binders may be mentioned the polyesters and acrylic polymers produced by (co)polymerizing monomers containing acetoacetate groups, and particularly acrylic (co)polymers obtained by (co)polymerizing acetoacetate esters of hydroxyalkyl (meth)acrylates optionally with other addition polymerizable monomers.

In other apsects, it is preferred that the acetoacetate group-containing binders possess a number average molecular weight (Mn) in the range of from about 1000 to about 100000, more preferably in the range of from about 1000 to about 10000, and an acetoacetate equivalent weight of about 200 to about 3000, more preferably from about 400 to 1500.

As examples of generally lipophilic binders containing epoxy groups, and preferably on average at least two epoxy groups, may be mentioned those disclosed in US3945964 (column 1, lines 13-54), US4318832 (column 2, line 39 through column 3, line 24), US4352898 (column 6, line 42 through column 7, line 17), US4598108 (column 1, line 39 through column 2, line 30), US4737530 (column 1, line 46 through column 2, line 37) and US4990577 (column 2, line 57 through column 3, line 23).

As specific examples of such, which may be solid or liquid, may be mentioned the mono-, di- or polyglycidyl ethers of (cyclo)aliphatic or aromatic hydroxyl compounds such as allyl alcohol, butanol, cyclohexanol, phenol, butyl phenol, decanol, ethylene glycol, glycerol, cyclohexane diol, mononuclear di- or trifunctional phenols, bisphenols such as Bisphenol-A or Bisphenol-F, and multi nuclear phenols; polyglycidyl ethers of phenol formaldehyde novolac; polymers of ethylenically compounds with epoxy groups such as glycidyl (meth)acrylate, N-glycidyl (meth)acrylamide and/or allyl glycidyl ether, and optionally one or more other copolymerizable, ethylenically unsaturated monomers; cycloaliphatic epoxy compounds such as epoxidized and optionally succesively hydrogenated styrene or divinyl benzene; glycidyl esters of fatty acids containing, for instance, 6-24 carbon atoms; isocyanurate group-containing epoxy compounds; an epoxidized polyalkadiene such as epoxidized polybutadiene; hydantoin epoxy resins; epoxy resins obtained by epoxidizing (cyclo)aliphatic alkenes such as dipentene dioxide, dicyclopentene dioxide and vinylcyclohexene dioxide; and glycidyl groups-containing resins such as polyesters or polyurethanes which contain one or more glycidyl groups per molecule.

Preferred of these include cycloaliphatic epoxy compounds and addition polymers of ethylenically unsaturated compounds containing epoxy groups, such as glycidyl (meth)acrylate and/or allyl glycidyl ether, and optionally one or more other addition polymerizable monomers. Especially preferred are the addition polymers.

As mentioned above, the reactive amphiphatic emulsifiers, when utilized in accordance with the present invention, function as emulsifying agents for these generally lipophilic crosslinkable binders. These reactive amphipatic emulsifiers comprise a lipophilic backbone having separately pendant therefrom:

(a) at least one activated unsaturated group; and
(b) at least one hydrophilic polyoxyalkylene group selected from

(1) a polyoxyalkylene monoalkylether group of the general formula (I)

$$-O-[(C_3H_6O)_n/(C_2H_4O)_{n1}] - R \qquad (I)$$

and
(2) a polyoxyalkylene monoamine monoalkylether group of the formula (II)

$$-N\begin{matrix} \diagup R^2 \\ \diagdown [(C_3H_6O)_{n2}/(C_2H_4O)_{n3}] - R^1 \end{matrix} \qquad (II)$$

wherein

R is selected from a $C_1$ to $C_4$ alkyl group,
$R^1$ is selected from an H atom and a $C_1$ to $C_4$ alkyl group,
$R^2$ is selected from (i) an alkyl group having 1 to 20 carbon atoms, (iia) the residue of a monoepoxide having 1 to 20 carbon atoms, (iib) the residue of a monoacrylate having 8 to 20 carbon atoms, (iii) a polyoxyalkylene monoether group of the general formula (III)

$$[(C_3H_6O)_{n4}/(C_2H_4O)_{n5}] - R^3 \qquad (III),$$

$R^3$ is selected from an H atom and a $C_1$ to $C_4$ alkyl group,
n, n2 and n4 are independently 0 to 25,
n1 is 4 to 40 and
n3 and n5 are independently 0 to 40,
with the proviso that $4 \leq n+n1 \leq 50$, $4 \leq n2+n3+n4+n5 \leq 50$ and $n3+n5 \geq 4$;

the reactive amphiphatic compound having an HLB value of at least about 6.

Preferred for (I) is the combination of R being a methyl group, n being 1 to 4 and nl being 10 to 20. Preferred for (II) is the combination of $R^1$ being a methyl group, n2 being from 2 to 4, n3 being from 16 to 20, and $R^2$ being selected from an alkyl group having 1 to 20 carbon atoms, the residue of a monoepoxide having 1 to 20 carbon atoms, the residue of a monoacrylate having 8 to 20 carbon atoms, and a polyoxyalkylene group of the general formula (III) as stated above.

As discussed further below, these hydrophilic polyoxyalkylene groups (I) and/or (II) may be attached to the lipophilic backbone directly and/or via a linking group.

Compounds suitable for use as the lipophilic backbones of the reactive amphiphatic emulsifiers include the same class of compounds previously discussed as suitable for use as the backbone of the generally lipophilic crosslinkable binders. Because the reactive amphiphatic emulsifiers contain pendant activated unsaturation, it is preferred to utilized the same lipophilic backbones as utilized with the activated unsaturated groups-containing binders discussed above. The preferred lipophilic backbones containing the pendant activated unsaturation, therefore, are essentially the same types of compounds disclosed for use as the activated unsaturated group-containing binders. Reference may be had to the above discussion and, more specifically, to previously set forth references for further details.

Suitable pendant activated unsaturated groups for use with the reactive amphiphatic compounds in accordance with the present invention are, again, the same previously discussed as suitable for the pendant activated unsaturated group-containing binders. Reference again may be had to the above discussion and the just mentioned previously set forth references for further details.

These pendant activated unsaturated groups may be linked to the lipophilic backbone via the same mechanisms as previously discussed with regard to the pendant activated unsaturated group-containing binders. Once again, reference may be had to this previous discussion as well as to the previously set forth references for further details.

Except as discussed below, the lipophilic backbones must, in addition to the at least one pendant activated unsaturated group, also contain a reactive group for attachment of the at least one pendant hydrophilic polyoxyalkylene group. As examples of suitable reactive groups may be mentioned pendant active hydrogen containing groups (e.g., carboxyl, hydroxyl and mercapto), pendant epoxy groups, pendant isocyanate groups, and pendant and internal activated unsaturated groups.

The exception is when the lipophilic backbone is formed from compounds already containing groups of the formulas (I) and/or (II), for example, by the (co)polymerization of monomers containing such groups.

The hydrophilic polyoxyalkylene monoalkylether group of the general formula (I) is preferably derived from a polyoxyalkylene monoalkylether of the general formula (IA)

$$HO - [(C_3H_6O)_n/(C_2H_4O)_{n1}] - R \qquad (IA)$$

wherein n, n1 and R are as generally defined above, while the hydrophilic polyoxyalkylene monoamine monoalkylether group of the general formula (II) is preferably derived from a polyoxyalkylene monoamine monoalkylether of the general formula (IIA)

```
       R2
      /
    HN                                  (IIA)
      \
       [(C3H6O)n2/(C2H4O)n3]  -  R1
```

wherein n2, n3, $R^1$ and $R^2$ are generally as defined above.

As mentioned above, the hydrophilic polyoxyalkylene groups (I) and (II) may be attached to the lipophilic backbone directly and/or via a linking group.

For example, these hydrophilic groups may be grafted directly onto the lipophilic backbone via reaction of (IA) and/or (IIA) with an active hydrogen or epoxy group pendant from the lipophilic backbone.

As another example, monomers containing a group of the formula (I) and/or (II) may be (co)polymerized to form an oligomer or polymer wherein the hydrophilic groups (I) and (II) become pendant from a lipophilic backbone.

As yet another example, a group of the formula (II) may be grafted directly onto the lipophilic backbone via the Michael addition of a compound of the general formula (IIA) to at least a portion of the activated unsaturated groups of an activated unsaturated group-containing compound.

As suitable linking groups may be mentioned compounds containing at least two active hydrogen groups, compounds containing at least two epoxy groups and/or compounds containing at least two isocyanate groups, of which

the compounds containing epoxy groups are preferred.

The linking is accomplished by reacting one or more compounds of the formulas (IA) and/or (IIA) with a multifunctional linking compound to produce a monofunctional compound, then grafting this monofunctional compound onto the lipophilic backbone via one of the reaction mechanisms discussed above.

An especially preferred option is to graft at least one pendant group of the formula (II) onto the backbone by the Michael addition of a compound of the formula (IIA) onto a portion the pendant activated unsaturation of the lipophilic backbone.

The dispersing agents in accordance with the present invention should comprise sufficient pendant polyoxyalkylene groups of the formulas (I) and/or (II) to result in a compound having an HLB value of at least about 6 to attain effective emulsification, and preferably in the range of from about 6 to about 14, more preferably from about 9 to about 11.

As is well-known, the HLB value is a qualitative characterization of a system and is obtained by the following calculation:

$$HLB = 20{,}0 \times \frac{\text{weight of hydrophilic components}}{\text{total weight of hydrophilic and lipophilic components.}}$$

In this formula, the fact that the hydrophilic component of the compound may contain some lipophilic constitutents, and vice versa, is not taken into account.

The aqueous coating compositions in accordance with the present invention may, in general, be formulated according to normal dispersion and/or emulsion techniques utilized in the coatings industry.

The reactive amphiphatic emulsifiers are generally utilized in amounts so as to result in at least about 2,5 parts by weight, preferably from about 5 to about 50 parts by weight, and especially from about 10 to about 30 parts by weight, of polyoxyalkyene groups per 100 parts by weight of the binder plus reactive amphiphatic emulsifier.

The particular choice of curing/crosslinking agent and amount utilized, of course, can vary widely depending on a number of factors including, but not limited to, the particular binder, coating system, application method, substrate and ulitimate use. These and other factors will be appreciated by one skilled in the art, who can choose the proper type and amount of curing agent accordingly.

For example, the amine crosslinking agents are preferably utilized in amounts such that the number of equivalents of functional groups of the binder plus reactive amphiphatic emulsifier to the number of equivalents of amine hydrogen is in the range of from about 1,5 to about 2,5, more preferably in the range of from about 1,8 to about 2,2.

As other examples with respect to activated unsaturated groups-containing binders, the malonate and acetoacetate crosslinking agents are preferably utilized in amounts such that the number of equivalents of activated unsaturated double bonds (binder plus reactive amphiphatic emulsifier) to the number of equivalents of activated methylene hydrogen is in the range of from about 0,25 to about 4, preferably in the range of from about 0,5 to about 2,0.

The oxazolidine crosslinking agents are preferably utilized in amounts such that the number of equivalents of activated unsaturated double bonds (binder plus reactive amphiphatic emulsifier) to the number of equivalents of potential secondary amine nitrogen is in the range of from about 0,2 to about 3,5, more preferably in the range of from about 1,0 to 2,0.

As another example, the polyallyloxy groups-containing curing/crosslinking agents are preferably utilized in amounts ranging from about 10 wt% to about 50 wt%, based upon the combined weight of the binder and reactive amphiphatic emulsifier.

In addition, the aqueous coating compositions may contain the usual additives such as, for example, pigments, fillers, levelling agents, emulsifiers, anti-foaming agents and other rheology control agents, catalysts, driers, antioxidants, UV stabilizers, anti-sag agents and minor amounts of co-solvents as required, the only limitation being that these additives must be compatible with the other components of the coating composition. This information is well-known and/or readily available to those skilled in the art.

If a co-solvent is utilized, it is preferred that such should be water miscible and utilized in amounts of no more than 10% by weight based upon the aqueous coating composition. As examples of suitable water-miscible co-solvents may be mentioned e.g. butyl glycol, isopropyl glycol, butyl diglycol, isopropanol, n-propanol and diacetone alcohol.

The aqueous coating compositions may be formulated to various solids contents, generally ranging from about 20% to about 60%, but desirably in the range of from about 30% to about 55%, depending on the method of application chosen.

The aqueous coating compositions in accordance with the present invention may be applied in any known manner, such as by roller coating, spraying, brushing, sprinkling, flow coating or dipping. It is preferred that the composition should be applied by spraying.

Suitable substrates include those of metals which may be pretreated or not, wood, synthetic materials, paper, glass or leather. Especially preferred are metals such as iron, steel and aluminum, and synthetic substrates such as polyurethanes, polyolefins and polycarbonates, as well as reinforced varieties thereof.

Curing of the coating, of course, depends upon the particular coating, application method and use. Again these factors and others will be appreciated by one skilled in the art, who can readily make the appropriate choice accordingly.

For example, coating compositions including the amine and active methylene crosslinking agents can suitably be cured at low or ambient temperatures, or can be baked at elevated temperatures of from about 60°C to about 120°C for accelerated cure.

An especially preferred use of the aqueous coating compositions in accordance with the present invention is in the automobile repair/refinishing industry. When so utilized, it is preferred that the system be ambient temperature curable, especially with the aid of an amine group-containing crosslinking agent. The binder, therefore, should comprise ambient temperature amine-reactive functional groups.

Especially preferred for this use are binders containing at least two pendant activated unsaturated groups which, most preferably, are (meth)acryloyl groups. For further details, reference may be had to the previous discussion and previously set forth references such as US4990577.

Another preferred use of the aqueous coating compositions in accordance with the present invention is as a primer for various metal substrates. When so utilized, it is again preferred that the system be ambient temperature curable, but with binders containing at least two pendent activated methylene groups. Especially preferred for this use is an acrylic-based binder containing pendant acetoacetate groups. For further details, reference may be had to the previous discussion and previously set forth references such as US4772680.

The foregoing general discussion of the present invention will be exemplified by the following examples offered by way of illustration and not limitation on the scope thereof.

EXAMPLES

Preparation of Binder A (BA)

Into a reactor were charged 2073,0 g of xylene, which were heated to boiling temperature. Next, there were added separately, over a period of three hours, a first mixture of

3463,0 g of glycidyl methacrylate,
2831,0 g of styrene,
3676,0 g of butyl acrylate and
521,0 g of decyl methacrylate,

and a second mixture of

735,0 g of xylene and
735,0 g of tert. butylperoxy-3,5,5-trimethyl hexanoate.

The resulting reaction mixture was kept at boiling temperature until a conversion of over 98% was obtained, at which time a further 400,0 g of xylene were added.

To the composition thus prepared were then added

1528,0 g of acrylic acid,
3,8 g of chromium(III)-2-ethyl hexanoate and
5,0 g of hydroquinone,

and the resulting mixture heated to 110°C with air being passed through until the acid number decreased below 2.

A 79,4% solution of Binder A was thereby obtained, which had an acid number of 0,8 and a C=C equivalent of about 600.

Preparation of Reactive Amphiphatic Compound A (RACA)

To 300,0 g of BA were added

| | |
|---|---|
| 297,8 g | of an adduct consisting of equimolar ratios of a polyoxyalkylene monoamine (commercially available under the trade designation Jeffamine M 1000 from Texaco Chemical) and a low molecular weight monoepoxide (commercially available under the trade designation Cardura E from Shell), and |
| 0,5 g | of hydroquinone monomethyl ether, |

and the reaction mixture was kept at 80°C for seven hours with air being passed through.

The reactive amphiphatic compound thus prepared had a solids content of about 88,6%, an HLB value of about

8,9 and a C=C equivalent weight of about 3300.

Preparation of Emulsion A (EA)

To 500 g of BA were added 78,8 g of RACA, and the mixture stirred until homogeneous. To this were slowly added 588,2 g of demineralized water under vigorous stirring at ambient temperature.

The resulting emulsion had a solids content of about 40% and an organic solvent content of about 9,6%.

Examples 1-3

Coating compositions were prepared by admixing stoichiometric amounts (1 equivalent ethylenically unsaturated double bond per equivalent active N-hydrogen group) of EA and a crosslinking agent as set forth below in Table I. As crosslinking agents were used:

(1) N-methyl-N-(3-aminopropyl) methylamine,
(2) a polyoxyalkylene triamine (commercially available under the trade designation Jeffamine T403 of Texaco Chemical) and
(3) 2,2,4-trimethyl hexamethylene diamine.

Panels were coated by applying the coating compositions, immediately after mixing, to glass panels to a wet film thickness of 120 µm using a doctor blade. The panels were stoved for 40 minutes at 90°C.

The cured films on the panels were all clear.

Solvent resistance of the cured films to ethanol (Et0H) and FAM-A (testing fluid for polymer materials according to DIN 51604) was measured by rubbing a 0,5 cm diameter roll of cellulose paper, soaked in the solvent, back and forth (1 D-rub) on the film with about 400g of pressure. The results after a set number of D-rubs were assessed in accordance with DIN 53230 (0 = unchanged, 5 = very strongly attacked), and the results presented below in Table 1.

TABLE I

| Example | Cross. | Solvent | No. of D-Rubs | Solvent Resistance |
|---|---|---|---|---|
| 1 | (1) | EtOH | 100 | 1 |
| | | FAM-A | 100 | 0-1 |
| 2 | (2) | EtOH | 100 | 0-1 |
| | | FAM-A | 100 | 0-1 |
| 3 | (3) | EtOH | 100 | 1 |
| | | FAM-A | 100 | 1 |

Only a limited number of preferred embodiments of the present invention have been described above.

**Claims**

**1.** An aqueous coating composition comprising (A) a generally lipophilic, crosslinkable binder, (B) optionally, a chemical curing/crosslinking agent for the crosslinkable binder and (C) an emulsifying agent, characterized in that the emulsifying agent comprises a reactive amphiphatic emulsifer which comprises a lipophilic backbone having separately pendant therefrom:

(a) at least one activated unsaturated group; and
(b) at least one hydrophilic polyoxyalkylene group selected from

(1) a polyoxyalkylene monoalkylether group of the general formula (I)

$$- O - [(C_3H_6O)_n/(C_2H_4O)_{n1}] - R \qquad (I)$$

and
(2) a polyoxyalkylene monoamine monoalkylether group of the formula (II)

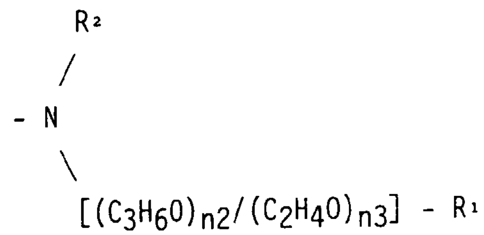

wherein

R is selected from a $C_1$ to $C_4$ alkyl group,
$R^1$ is selected from an H atom and a $C_1$ to $C_4$ alkyl group,
$R^2$ is selected from (i) an alkyl group having 1 to 20 carbon atoms, (iia) the residue of a monoepoxide having 1 to 20 carbon atoms, (iib) the residue of a monoacrylate having 8 to 20 carbon atoms, and (iii) a polyoxyalkylene monoether group of the general formula (III)

$$[(C_3H_6O)_{n4}/(C_2H_4O)_{n5}] - R_3 \qquad \text{(III)},$$

$R^3$ is selected from a $C_1$ to $C_4$ alkyl group,
n, n2 and n4 are independently 0 to 25,
n1 is 4 to 40 and
n3 and n5 are independently 0 to 40,

with the proviso that $n+n1 \leq 50$, $4 \leq n2+n3+n4+n5 \leq 50$ and $n3+n5 \geq 4$;
the reactive amphiphatic emulsifier having an HLB value of at least about 6,0 wherein the crosslinking functionality of the generally lipophilic crosslinkable binder (A) is capable of reacting under the same conditions as the at least one activated unsaturated group (a) of the reactive amphiphatic emulsifier.

**2.** The aqueous coating composition according to claim 1, characterized in that the HLB value is from about 6 to about 14.

**3.** The aqueous coating composition according to claim 2, characterized in that the HLB value is from about 9 to about 11.

**4.** The aqueous coating composition according to claim 1, characterized in that the pendant polyoxyalkylene group (I) is derived from a polyoxyalkylene monoalkylether of the general formula (IA)

$$HO - [(C_3H_6O)_n/(C_2H_4O)_{n1}] - R \qquad \text{(IA)}$$

wherein n, n1 and R are defined as in claim 1, and the pendant polyoxylkylene group (II) is derived from a polyoxyalkylene monoamine monoalkylether of the general formula (IIA)

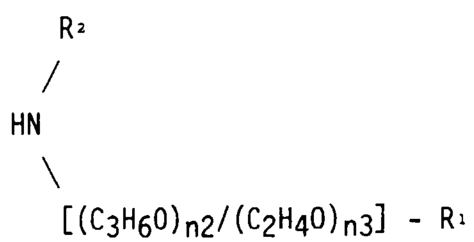

(IIA)

wherein $n_2$, $n_3$, $R^1$ and $R^2$ are defined as in claim 1.

**5.** The aqueous coating composition according to claim 1, characterized in that R is a methyl group, n is 1 to 4 and n1 is 10 to 20.

6. The coating composition according to claim 1, characterized in that $R^1$ is a methyl group, n2 is from 2 to 4, n3 is from 16 to 20, and $R^2$ is selected from

(i) an alkyl group having 1 to 20 carbon atoms,

(iia) the residue of a monoepoxide compound having from 1 to 20 C atoms,
(iib) the residue of a monoacrylate having 8 to 20 carbon atoms, and
(iii) a polyoxyalkylene group of the general formula (III).

7. The aqueous coating composition according to claim 1, characterized in that the hydrophilic polyoxyalkylene group (b) is attached to the lipophilic backbone directly and/or via a linking group.

8. The aqueous coating composition according to claim 1, characterized in that it comprises the reactive amphiphatic emulsifier in an amount so as to result in at least 2,5 parts by weight of polyoxyalkylene groups per 100 parts by weight of the combination of the generally lipophilic binder plus reactive amphiphatic emulsifier.

9. The aqueous coating composition according to claim 8, characterized in that it comprises the reactive amphiphatic emulsifier in an amount so as to result in from about 5 to about 50 parts by weight of polyoxyalkylene groups per 100 parts by weight of the combination of the generally lipophilic binder plus reactive amphiphatic emulsifer.

10. The aqueous coating composition according to claim 9, characterized in that it comprises the reactive amphiphatic emulsifier in an amount so as to result in from about 10 to about 30 parts by weight of polyoxyalkylene groups per 100 parts by weight of the combination of the generally lipophilic binder plus reactive amphiphatic emulsifier.

11. The aqueous coating composition according to any one of claims 1-10, characterized in that the coating composition comprises an amine group-containing compound as crosslinking agent, and that the binder comprises amine-reactive functional groups.

12. The aqueous coating composition according to claim 11, characterized in that the binder comprises ambient temperature amine-reactive functional groups.

13. The aqueous coating composition according to claim 12, characterized in that the binder comprises on average at least two pendant activated unsaturated groups.

14. The aqueous coating composition according to claim 12, characterized in that the binder comprises on average at least two activated methylene groups.

15. The aqueous coating composition according to claim 11, characterized in that the number of amine-reactive functional groups of the binder to the number equivalents of amine hydrogen of the crosslinking agent is in the range of from about 1,5 to about 2,5.

16. The aqueous coating composition according to any one of claims 1-10, characterized in that the coating composition comprises an allyloxy groups-containing curing/crosslinking agent.

17. The aqueous coating composition according to claim 16, characterized in that the binder comprises on average at least two pendant activated unsaturated groups.

18. The aqueous coating composition according to claim 16, characterized in that the coating composition comprises the allyloxy groups-containing curing/crosslinking agent in an amounts ranging from about 10 wt% to about 50 wt% based upon the combined weight of the binder and reactive amphiphatic emulsifier.

**Patentansprüche**

1. Wässriges Beschichtungsmittel, das (A) einen allgemein lipophilen, vernetzbaren Binder, (B) gewünschtenfalls ein chemisches Härtungs-Nernetzungsmittel für den vernetzbaren Binder und (C) ein Emulgiermittel enthält, dadurch gekennzeichnet, dass das Emulgiermittel einen reaktiven amphiphatischen Emulgator enthält, der eine lipophile Grundkette mit separaten Seitengruppen aufweist, nämlich

(a) mindestens eine aktivierte ungesättigte Gruppe und
(b) mindestens eine hydrophile Polyoxyalkylengruppe, gewählt aus

(1) Polyoxyalkylen-monoalkylethergruppen der allgemeinen Formel (I)

$$- O - [(C_3H_6O)_n/(C_2H_4O)_{n1}] - R \qquad (I)$$

und
(2) Polyoxyalkylen-monoamin-monoalkylethergruppen der allgemeinen Formel (II)

$R_2$
/
- N (II),
\
$[(C_3H_6O)_{n2}/(C_2H_4O)_{n3}] - R_1$

worin

R gewählt ist aus $C_1$ bis $C_4$-Alkylgruppen,
$R_1$ gewählt ist aus Wasserstoffatomen und $C_1$ bis $C_4$-Alkylgruppen,
$R_2$ gewählt ist aus (i) Alkylgruppen mit 1 bis 20 Kohlenstoffatomen,
($ii_a$) dem Rest eines Monoepoxides mit 1 bis 20 Kohlenstoffatomen,
($ii_b$) dem Rest eines Monoacrylates mit 8 bis 20 Kohlenstoffatomen und
(iii) Polyoxyalkylen-monoethergruppen der Formel (III)

$$[(C_3H_6O)_{n4}/(C_2H_4O)_{n5}] - R_3 \qquad (III),$$

worin $R_3$ gewählt ist aus $C_1$ bis $C_4$ Alkylgruppen,

n, n2 und n4 unabhängig voneinander Null bis 25 bedeuten,
n1 gleich 4 bis 40 ist und
n3 sowie n5 unabhängig Null bis 40 bedeuten,
mit der Massgabe, dass $n+n1 \leq 50$, 4 £ n2+n3+n4+n5 ≤ 50 und $n3+n5 \leq 4$ ist,

wobei der reaktive amphiphatische Emulgator einen HLB-Wert von mindestens etwa 6,0 besitzt und wobei die Vernetzungsfunktionalität des allgemein lipophilen, vernetzbaren Binders (A) zur Reaktion unter den gleichen Bedingungen befähigt ist, wie die mindestens eine aktivierte ungesättigte Gruppe (a) des reaktiven amphiphatischen Emulgators.

**2.** Wässriges Beschichtungsmittel nach Anspruch 1, dadurch gekennzeichnet, dass der HLB-Wert etwa 6 bis etwa 14 beträgt.

**3.** Wässriges Beschichtungsmittel nach Anspruch 2, dadurch gekennzeichnet, dass der HLB-Wert etwa 9 bis etwa 11 beträgt.

**4.** Wässriges Beschichtungsmittel nach Anspruch 1, dadurch gekennzeichnet, dass die anhängende Polyoxyalkylengruppe (I) abgeleitet ist von einem Polyoxyalkylenmonoalkylether der allgemeinen Formel (IA)

$$HO - [(C_3H_6O)_n/(C_2H_4O)_{n1}] - R \qquad (IA)$$

worin n, n1 und R wie in Anspruch 1 definiert sind und die anhängende Polyoxyalkylengruppe (II) von einem Polyoxyalkylen-monoamin-monoalkylether der allgemeinen Formel (IIA) abgeleitet ist

$R_2$
/
HN (IIA)
\
$[(C_3H_6O)_{n2}/(C_2H_4O)_{n3}] - R_1$

worin $n_2$, $n_3$, $R_1$ und $R_2$ wie in Anspruch 1 definiert sind.

**5.** Wässriges Beschichtungsmittel nach Anspruch 1, dadurch gekennzeichnet, dass R eine Methylgruppe, n gleich 1 bis 4 und n1 gleich 10 bis 20 ist.

**6.** Wässriges Beschichtungsmittel nach Anspruch 1, dadurch gekennzeichnet, dass $R_1$ eine Methylgruppe, n2 gleich 2 bis 4, n3 gleich 16 bis 20 und $R_2$ gewählt ist aus

(i) Alkylgruppen mit 1 bis 20 Kohlenstoffatomen

(iia) dem Rest einer Monoepoxidverbindung mit 1 bis 20 C-Atomen
(iib) dem Rest eines Monoacrylates mit 8 bis 20 Kohlenstoffatomen und
(iii) Polyoxyalkylengruppen der allgemeinen Formel (III).

**7.** Wässriges Beschichtungsmittel nach Anspruch 1, dadurch gekennzeichnet, dass die hydrophile Polyoxyalkylengruppe (b) direkt und/oder über eine Brückengruppe mit der lipophilen Grundkette verbunden ist.

**8.** Wässriges Beschichtungsmittel nach Anspruch 1, dadurch gekennzeichnet, dass es den reaktiven amphiphatischen Emulgator in einem solchen Anteil enthält, dass dies zu mindestens 2,5 Gewichtsteilen Polyoxyalkylengruppen auf 100 Gewichtsteile der Kombination aus dem allgemein lipophilen Binder und reaktivem amphiphatischen Emulgator führt.

**9.** Wässriges Beschichtungsmittel nach Anspruch 8, dadurch gekennzeichnet, dass es den reaktiven amphiphatischen Emulgator in einem solchen Anteil enthält, dass dies zu etwa 5 bis etwa 50 Gewichtsteilen Polyoxyalkylengruppen auf 100 Gewichtsteile der Kombination aus dem allgemein lipophilen Binder zusammen mit dem reaktiven amphiphatischen Emulgator führt.

**10.** Wässriges Beschichtungsmittel nach Anspruch 9, dadurch gekennzeichnet, dass es den reaktiven amphiphatischen Emulgator in einem solchen Anteil enthält, dass dies zu etwa 10 bis etwa 30 Gewichtsteilen Polyoxyalkylengruppen auf 100 Gewichtsteile der Kombination aus dem allgemein lipophilen Binder zusammen mit dem reaktiven amphiphatischen Emulgator führt.

**11.** Wässriges Beschichtungsmittel nach einem der Ansprüche 1-10, dadurch gekennzeichnet, dass das Beschichtungsmittel eine Amingruppen enthaltende Verbindung als Vernetzungsmittel enthält und dass der Binder aminreaktive funktionelle Gruppen enthält.

**12.** Wässriges Beschichtungsmittel nach Anspruch 11, dadurch gekennzeichnet, dass der Binder aminreaktive funktionelle Gruppen enthält, die bei Umgebungstemperatur reaktiv sind.

**13.** Wässriges Beschichtungsmittel nach Anspruch 12, dadurch gekennzeichnet, dass der Binder im Mittel mindestens zwei anhängende aktivierte ungesättigte Gruppen enthält.

**14.** Wässriges Beschichtungsmittel nach Anspruch 12, dadurch gekennzeichnet, dass der Binder im Mittel mindestens zwei aktivierte Methylengruppen enthält.

**15.** Wässriges Beschichtungsmittel nach Anspruch 11, dadurch gekennzeichnet, dass die Anzahl von aminreaktiven funktionellen Gruppen des Binders zur Anzahl Äquivalente an Aminwasserstoff des Vernetzungsmittels im Bereich von etwa 1,5 bis etwa 2,5 liegt.

**16.** Wässriges Beschichtungsmittel nach einem der Ansprüche 1-10, dadurch gekennzeichnet, dass das Beschichtungsmittel ein Allyloxygruppen enthaltendes Härtungs-Nernetzungsmittel enthält.

**17.** Wässriges Beschichtungsmittel nach Anspruch 16, dadurch gekennzeichnet, dass der Binder im Mittel mindestens zwei anhängende aktivierte ungesättigte Gruppen enthält.

**18.** Wässriges Beschichtungsmittel nach Anspruch 16, dadurch gekennzeichnet, dass das Beschichtungsmittel das Allyloxygruppen enthaltende Härtungs-Nemetzungsmittel in Anteilen von etwa 10 Gew.% bis etwa 50 Gew.%, bezogen auf das kombinierte Gewicht von Binder und reaktivem amphiphatischem Emulgator enthält.

**Revendications**

**1.** Une composition de revêtement aqueuse comprenant :

(A) un liant réticulable généralement lipophile ;
(B) éventuellement un agent de durcissement/réticulation chimique pour le liant réticulable ; et
(C) un agent émulsifiant,

caractérisée en ce que l'agent émulsifiant comprend un émulsifiant amphiphile réactif qui comprend un squelette lipophile portant à titre de chaîne latérale:

(a) au moins un groupe insaturé activé ; et
(b) au moins un groupe polyoxyalkylène hydrophile choisi parmi :

(1) un groupe polyoxyalkylène monoalkyléther de formule générale (I) :

$$- O - [(C_3H_6O)_n/(C_2H_4O)_{n1}] - R \qquad (I)$$

et
(2) un groupe polyoxyalkylène monoamine monoalkyléther de formule (II) :

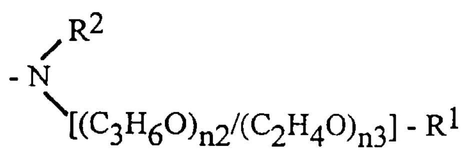

(II)

dans laquelle :

R est choisi parmi les groupes alkyle en $C_1$ à $C_4$,
$R^1$ est choisi parmi les atomes d'hydrogène et les groupes alkyle en $C_1$ à $C_4$,
$R^2$ est choisi parmi :

(i) un groupe alkyle comportant 1 à 20 atomes de carbone,

(iia) le résidu d'un monoépoxyde comportant 1 à 20 atomes de carbone,
(iib) le résidu d'un monoacrylate comportant 8 à 20 atomes de carbone, et
(iii) un groupe polyoxyalkylène monoéther de formule générale (III) :

$$[(C_3H_6O)_{n4}/(C_2H_4O)_{n5}] - R^3 \qquad (III)$$

dans laquelle :

| | |
|---|---|
| $R^3$ | est choisi parmi un atome d'hydrogène et les groupes alkyle en $C_1$ à $C_4$, |
| n, n2 et n4 | sont indépendamment des nombres de 0 à 25, |
| n1 | est un nombre compris entre 4 et 40, et |
| n3 et n5 | sont indépendamment l'un de l'autre des nombres de 0 à 40, avec cette condition que n+n1 ≤ 50, 4≤n2+n3+n4+n5 s 50 et n3+n5 ≥ 4 ; |

l'émulsifiant amphiphile réactif ayant un indice HLB d'au moins 6,0 environ, dans laquelle la fonctionnalité réticulante du liant (A) réticulable généralement lipophile est capable de réagir dans les mêmes conditions qu'au moins un des groupes insaturés activés (a) de l'émulsifiant amphiphile réactif.

**2.** La composition de revêtement aqueuse selon la revendication 1, caractérisée en ce que l'indice HLB est compris entre environ 6 et environ 14.

**3.** La composition de revêtement aqueuse selon la revendication 2, caractérisée en ce que l'indice HLB est compris entre environ 9 et environ 11.

**4.** La composition de revêtement aqueuse selon la revendication 1, caractérisée en ce que le groupe polyoxyalkylène pendant (I) dérive d'un polyoxyalkylène monoalkyléther de formule générale (IA)

$$HO - [(C_3H_6O)_n/(C_2H_4O)_{n1}] - R \qquad (IA)$$

dans laquelle n, nl et R sont tels que définis dans la revendication 1, et le groupe polyoxyalkylène pendant (II) dérive d'un polyoxyalkylène monoamine monoalkyléther de formule générale (IIA) :

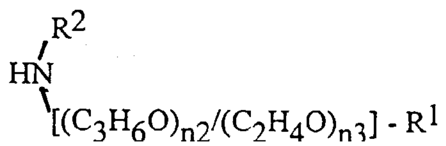

(IIA)

dans laquelle n2, n3, $R^1$ et $R^2$ sont généralement tels que définis dans la revendication 1

**5.** La composition de revêtement aqueuse selon la revendication 1, caractérisée en ce que R est un groupe méthyle, n est un nombre compris entre 1 et 4, et n1 est un nombre compris entre 10 et 20.

**6.** La composition de revêtement aqueuse selon la revendication 1, caractérisée en ce que $R^1$ est un groupe méthyle, n2 est un nombre compris entre 2 et 4, n3 est un nombre compris entre 16 et 20 et $R^2$ est choisi parmi :

(i) un groupe alkyle comportant 1 à 20 atomes de carbone,

(iia) le résidu d'un dérivé monoépoxyde comportant de 1 à 20 atomes de carbone,
(iib) le résidu d'un monoacrylate comportant de 8 à 20 atomes de carbone, et
(iii) un groupe polyoxyalkylène de formule générale (III).

**7.** La composition de revêtement aqueuse selon la revendication 1, caractérisée en ce que le groupe polyoxyalkylène hydrophile (b) est fixé directement sur le squelette lipophilique et/ou via un groupe de liaison.

**8.** La composition de revêtement aqueuse selon la revendication 1, caractérisée en ce qu'elle comprend l'émulsifiant amphiphile réactif en une quantité telle qu'on obtienne au moins 2,5 parties en poids de groupe polyoxyalkylène pour 100 parties en poids de combinaison de liant généralement lipophile plus l'émulsifiant amphiphile réactif.

**9.** La composition de revêtement aqueuse selon la revendication 8, caractérisée en ce qu'elle comprend l'émulsifiant amphiphile réactif en une quantité telle qu'on obtienne d'environ 5 à environ 50 parties en poids de groupes polyoxyalkylènes pour 100 parties en poids de combinaison de liant généralement lipophile plus l'émulsifiant amphiphile réactif.

**10.** La composition de revêtement aqueuse selon la revendication 9, caractérisée en ce qu'elle comprend l'émulsifiant amphiphile réactif en une quantité telle qu'on obtienne d'environ 10 à environ 30 parties en poids de groupes polyoxyalkylènes pour 100 parties en poids de combinaison de liant généralement lipophile plus l'émulsifiant amphiphile réactif.

**11.** La composition de revêtement aqueuse selon l'une quelconque des revendication 1 à 10, caractérisée en ce que la composition d'enduction comprend un composé comportant un groupe amine en tant qu'agent de réticulation et en ce que le liant comprend des groupes fonctionnels réactifs sur la fonction amine.

**12.** La composition de revêtement aqueuse selon la revendication 11, caractérisée en ce que le liant comprend des

groupes fonctionnels réagissant sur les amines à température ambiante.

**13.** La composition de revêtement aqueuse selon la revendication 12, caractérisée en ce que le liant comprend en moyenne deux groupes à insaturation activée pendants.

**14.** La composition de revêtement aqueuse selon la revendication 12, caractérisée en ce que le liant comprend en moyenne au moins deux groupes méthylène actifs.

**15.** La composition de revêtement aqueuse selon la revendication 11, caractérisée en ce que le nombre de groupes fonctionnels réagissant sur les amines du liant rapporté au nombre d'équivalents d'hydrogène aminé de l'agent de réticulation est compris entre environ 1,5 et environ 2,5.

**16.** La composition de revêtement aqueuse selon une quelconque des revendications 1 à 10, caractérisée en ce que la composition d'enduction comprend un agent de durcissement/réticulation contenant des groupes allyloxy.

**17.** La composition de revêtement aqueuse selon la revendication 16, caractérisée en ce que le liant comprend en moyenne au moins deux groupes insaturés activés pendants.

**18.** La composition de revêtement aqueuse selon la revendication 16, caractérisée en ce que la composition d'enduction comprend l'agent de durcissement/réticulation contenant les groupes allyloxy en une quantité comprise entre environ 10 % en poids et environ 50 % en poids par rapport au poids combiné de liant et d'émulsifiant amphiphiles réactifs.